# EUROPEAN PATENT APPLICATION

(11) **EP 4 119 509 A1**
(43) Date of publication of application: **18.01.2023**
(21) Application number: 20924457.3
(22) Date of filing: 02.09.2020
(51) Int. Cl.: C02F 5/00, C02F 5/10, F22B 37/00

(54) **METHOD FOR SUPPRESSING CORROSION FATIGUE OF BOILER EVAPORATION TUBE**

(30) Priority: 12.03.2020 JP 2020043294
(71) Applicant: Kurita Water Industries Ltd., Tokyo 164-0001 (JP)
(72) Inventor: SAKAI, Mizuyuki, Tokyo 164-0001 (JP); UCHIDA, Kazuyoshi, Tokyo 164-0001 (JP)
(74) Representative: Hoffmann Eitle
(86) International application number: PCT/JP2020/033204
(87) International publication number: WO 2021/181722

(57) **Abstract**

This invention effectively suppresses the corrosion fatigue of a boiler evaporation tube that is associated with repeated stress attributed to the presence of a corrosive environment and scales. This method for suppressing corrosion fatigue of a boiler evaporation tube includes maintaining the dissolved oxygen concentration of the boiler water at 1.0 mg/L or less. Preferably deionized water is used for the boiler water and a scale dispersant is present in the boiler water.

## Description

### Technical Field

The present invention relates to a method for inhibiting corrosion fatigue of an evaporation tube in a boiler. In particular, the present invention relates to a method for effectively inhibiting corrosion fatigue of an evaporation tube in a boiler associated with a corrosive environment and repeated stress due to the presence of scales.

### Background Art

In recent years, many boilers in the market of low-pressure boilers have a heat transfer area of 10 to 40 m², and in particular, a compact multi-tubular special circulation boiler constituted with only a header, a steam separator, and an evaporation tube (hereinafter, referred to as "small-type once-through boiler") has the overwhelming share. The small-type once-through boiler is often operated with multiple can installation in which a plurality of boilers are installed, and operated with repeated starts and stops in many times depending on an demand amount of steam. Water is fed particularly at a lower part of the evaporation tube with a circulation ratio of 2 or less. Thus, the proximity of the lower part had a low pH and a high level of dissolved oxygen, and corrosion is likely to occur. In many cases, corrosion fatigue derived from this corrosive environment and repeated stress generated by change in temperature due to the starts and stops of the boiler operations causes cracking on the evaporation tube, leading to water leakage.

It is difficult to completely prevent such corrosion fatigue by only conventional water treatment of fed water into the boiler (hereinafter, also referred to as feed-water for the boiler). Accordingly, cracking may occur on the evaporation tube to cause water leakage in approximately three years in the shortest.

With insufficient water quality management of the feed-water for the boiler, a scale component often causes contamination of the feed-water for the boiler to generate scales adhering in the boiler. In particular, scale adhesion onto a heat transfer surface of the boiler inhibits heat transfer to lower thermal efficiency of the boiler, leading to increase in a fuel cost. Thus, prevention of the scale adhesion, in addition to prevention of the corrosion fatigue, is required for the boiler.

Art for inhibiting the corrosion and art for inhibiting the scale adhesion are conventionally reported separately.

For example, measures for inhibiting the corrosion include the following (1) to (3).
(1) pH of water in a steam generator of a boiler (hereinafter, water in the boiler) is maintained at an upper limit of a control standard value.
(2) The concentration of an oxygen scavenger is maintained at high within a control standard value.
(3) Blowing a can bottom is performed not immediately after finishing operation but immediately before starting operation to inhibit contamination of oxygen at a high concentration and to inhibit lowering the pH.

Measures for inhibiting the scale include the following (1) to (3).
(1) A reverse-osmosis membrane treatment or a softening treatment of the feed-water for the boiler is performed.
(2) In order to inhibit scale generation, a scale dispersant or a boiler compound is added (For example, PTL 1 and 2).
(3) Blow control of the water in the boiler is performed to eliminate the scale component.

### Citation List

### Patent Literatures

PTL1: JP 2017-74550A
PTL2: JP 2017-12991A

### Summary of Invention

### Technical Problem

The corrosion fatigue of the evaporation tube in the boiler cannot be sufficiently inhibited by the conventional methods for inhibiting corrosion in some cases.

The present inventors have investigated a cause of the corrosion fatigue, and as a result, have found that, in many cases, scales adhering to a potion having high heat transfer load, such as the evaporation tube, rises a temperature of a tube wall of the evaporation tube to expand and contract the evaporation tube with starting and stopping the boiler operation, and consequently enlarged stress and corrosion fatigue break the evaporation tube to cause water leakage. From this finding, the preset inventors have found that the corrosion fatigue of the evaporation tube in the boiler is significantly associated with not only the corrosive environment but also the presence of the scales.

An object of the present invention is to provide a method for effectively inhibiting the corrosion fatigue of the evaporation tube in the boiler associated with the corrosive environment and the repeated stress due to the presence of scales.

### Solution to Problem

The present inventors have found that reducing a dissolved oxygen concentration of water in the boiler can sufficiently inhibit the corrosion and effectively inhibit the corrosion fatigue of the evaporation tube. In addition, the present inventors have found that using ion-exchanged water for the water in the boiler and adding a scale dispersant to the water in the boiler to further inhibit the scale adhesion can further inhibit the corrosion fatigue of the evaporation tube.

The present invention is summarized as follows.
[1] A method for inhibiting corrosion fatigue of an evaporation tube in a boiler, comprising controlling a dissolved oxygen concentration of water in the boiler to 1.0 mg/L or less.
[2] The method for inhibiting corrosion fatigue of an evaporation tube in a boiler according to [1], comprising using ion-exchanged water for the water in the boiler.
[3] The method for inhibiting corrosion fatigue of an evaporation tube in a boiler according to [1] or [2], comprising adding a scale dispersant to the water in the boiler.
[4] The method for inhibiting corrosion fatigue of an evaporation tube in a boiler according to [3], wherein the scale dispersant is at least one poly(meth)acrylic acid compound selected from the group consisting of polyacrylic acid having a weight-average molecular weight of 20,000 to 170,000 and a salt thereof, and polymethacrylic acid having a weight-average molecular weight of 1,000 to 100,000 and a salt thereof.
[5] The method for inhibiting corrosion fatigue of an evaporation tube in a boiler according to [3] or [4], wherein a concentration of the scale dispersant in the water in the boiler is 1 to 1,000 mg/L.
[6] The method for inhibiting corrosion fatigue of an evaporation tube in a boiler according to any one of [1] to [5], wherein the boiler is a small-type once-through boiler.

### Advantageous Effect of Invention

According to the present invention, the corrosion fatigue of the evaporation tube in the boiler caused by the corrosive environment and the repeated stress due to the presence of scales is effectively inhibited to intent to extend a lifetime of the boiler.

### Brief Description of Drawing

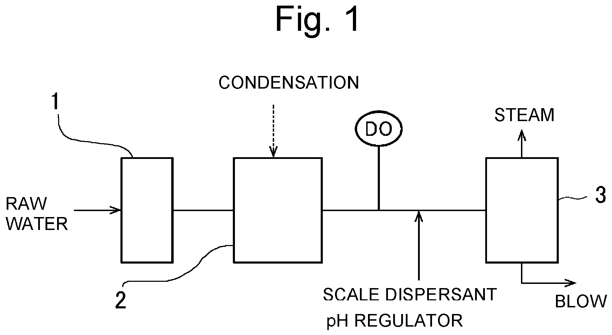

[Fig. 1] Fig. 1 is a schematic view illustrating a flow of a water system in a boiler of a test target in Test Examples I and II.

### Description of Embodiments

Hereinafter, embodiments of the present invention will be described in detail.

A method for inhibiting corrosion fatigue of an evaporation tube in a boiler according to the present embodiment is characterized by controlling a dissolved oxygen concentration of water in the boiler, that is, water in a steam generator in a boiler, to 1.0 mg/L or less.

A method for reducing the dissolved oxygen concentration of the water in the boiler may be any of a degassing treatment with a degasser and a method for adding a chemical such as an oxygen scavenger. When the temperature is low, such as operation starting, the method employing a chemical is unlikely to exhibit sufficient deoxygenating effect. Thus, it is preferred to use a degasser such as a membrane-type degasser.

If the dissolved oxygen concentration of the water in the boiler is more than 1.0 mg/L, the corrosion of the evaporation tube is likely to occur to cause the corrosion fatigue. The lower the dissolved oxygen concentration of the water in the boiler, the superior the effect of inhibiting the corrosion fatigue of the evaporation tube. Thus, in the present embodiment, the dissolved oxygen concentration of the water in the boiler is preferably controlled to 0.5 mg/L or less, and more preferably controlled to 0.1 mg/L or less.

The dissolved oxygen concentration of the water in the boiler is controlled by, for example, regulating a dissolved oxygen concentration of feed-water for the boiler with equal to or lower than an upper limit of the dissolved oxygen concentration of the water in the boiler by using the above method.

In the present embodiment, as above, the dissolved oxygen concentration of the water in the boiler is reduced. In addition, a scale dispersant is added to the water in the boiler to inhibit the scale adhesion onto the evaporation tube, or ion-exchanged water in which corrosive salts is rejected is used for the water in the boiler to inhibit corrosion triggering the corrosion fatigue. This configuration can further effectively inhibit the corrosion fatigue.

The ion-exchanged water can be produced by desalination treatment of raw water with an ion-exchanger. The ion-exchanged water may be, for example, fed into a water feeding tank of a feed-water system of the boiler (water feeding line) as supplying water.

The scale dispersant inhibits scaling of a hardness component contained in the water system, or rejects scales that has adhered. Examples of the scale dispersant include: phosphate salts such as trisodium phosphate and sodium tripolyphosphate; and polymers such as polyacrylic acid and/or a salt thereof, polymethacrylic acid and/or a salt thereof, a copolymer of acrylic acid and 2-acrylamide-2-methylpropanesulfonic acid and/or a salt thereof. The scale dispersant is preferably a poly(meth)acrylic acid compound such as polyacrylic acid having a weight-average molecular weight of 20,000 to 170,000 and/or a salt thereof, or polymethacrylic acid having a weight-average molecular weight of 1,000 to 100,000 and/or a salt thereof. The weight-average molecular weight of the polyacrylic acid and/or a salt thereof is more preferably more than 20,000 and 170,000 or less, and further preferably more than 50,000 and 120,000 or less. The weight-average molecular weight of the polymethacrylic acid or a salt thereof is more preferably more than 1,000 and 100,000 or less, and further preferably more than 5,000 and 80,000 or less.

These scale dispersants may be used alone, and may be used in combination of two or more thereof.

When the scale dispersant is used, a place where the scale dispersant is added is not particularly limited as long as the scale dispersant is contained in the water in the boiler. The scale dispersant is added into at least one place of a water system in the boiler including a water feeding system (water feeding line), water supplying system (water supplying line), water in the boiler, and water condensate system (water condensate line) of the boiler. The scale dispersant may be added into any of piping of the feed-water for the boiler, a water feeding tank, water supplying piping, a water supplying tank, water condensate piping, and a water condensate tank, and may be added at two or more of these places.

When the scale dispersant is added into the water system in the boiler, the addition amount is not particularly limited, and varies depending on quality of the feed-water for the boiler (the dissolved oxygen concentration and concentrations of corrosive salts) and scaling tendency derived from the operation condition of the boiler. From the viewpoint of reducing the chemical cost and obtaining a sufficient scale inhibition effect, for example with the polymer-type scale dispersant, the scale dispersant is preferably added at an amount so that the concentration in the feed-water for the boiler becomes 1 to 1,000 mg/L, particularly 10 to 500 mg/L.

When the ion-exchanged water is used for the water in the boiler, as quality of the ion-exchanged water, electroconductivity is preferably 1 mS/m or less, particularly 0.5 mS/m or less, and especially 0.1 mS/m or less. With the ion-exchanged water in which salts are rejected so that the electroconductivity is equal to or lower than the above upper limit, the corrosion of the evaporation tube can be more surely inhibited to improve the inhibition effect of the corrosion fatigue.

In the water system in the boiler, soft water in which raw water is subjected to a softening treatment with a softener is used for the feed-water for the boiler to inhibit scales in some cases. However, the softening treatment alone rejects only a cationic component, and cannot reject the corrosive salts, leading to insufficient effect of inhibiting the corrosion fatigue of the evaporation tube.

In the present embodiment, in addition to the control of the dissolved oxygen concentration of the feed-water for the boiler, the soft water in which raw water is subjected to the softening treatment may be used for the feed-water for the boiler. In this case, the corrosion fatigue of the evaporation tube is inhibited more easily.

The boiler to which the present invention is applied is not particularly limited, but is preferably a boiler with a steam pressure of 4 MPa or lower, and more preferably a low-pressure boiler with a steam pressure of 2 MPa or lower from the viewpoint that the corrosion fatigue of the evaporation tube is likely to occur. Examples of representative low-pressure boilers include a small-type once-through boiler. A steam pressure of the small-type once-through boiler is, for example, 1 MPa or lower.

Types of the small-type once-through boiler include a round can body and a rectangular can body. The round can body is a can body having a combustion chamber at a central part and disposing a burner at an upper part. The rectangular can body is a can body having no combustion chamber and disposing a gas burner adjacent to a side face of a water tube.

The corrosion fatigue of the evaporation tube is more likely to occur in the rectangular can body than the round can body. According to the present invention, controlling the dissolved oxygen concentration of the water in the boiler, and in addition, using the scale dispersant and/or using the ion-exchanged water for the water in the boiler enable to sufficiently inhibit the corrosion fatigue of the evaporation tube even in the rectangular small-type once-through boiler.

The corrosion fatigue is more likely to occur in the rectangular can body presumably because thermal load becomes ununiform in the rectangular can body compared with the round can body due to its structure, and thus the evaporation tube is likely to expand and contract to cause the corrosion fatigue triggered by the corrosion.

### Examples

Hereinafter, Experimental Examples, Examples, and Comparative Examples will be described.

Hereinafter, concentrations of chloride ion, sulfate ion, and silica were analyzed in advance in accordance with "JIS B8224 Boiler feed water and boiler water - Testing methods".

### [Experimental Example 1]

Effect of the dissolved oxygen on the corrosion fatigue was evaluated by a corrosion fatigue test.

First, the following preparation was performed to determine a rupture condition of a used specimen.

A specimen made of a material STB340 was processed for a circular-arc fatigue test. Specifically, the specimen was processed to a shape having a parallel part and an R part (circular-arc part), and the parallel part and the R part were #800-polished.

This specimen was used to perform a tensile test in the atmosphere, and a stress corresponding to a maximum load in an elastic region was determined as 220 MPa. This value was set as the maximum stress in the corrosion fatigue test.

Then, the above specimen was set on an axis of a corrosion fatigue tester, and 1 L of a test solution was poured into a fixed beaker so that the specimen was completely immersed.

The test solution was adjusted to have the following test solution composition and pH by using ion-exchanged water, sodium chloride and sodium sulfate that were special grade reagents, 48% sodium hydroxide, and sodium silicate No. 3. The temperature of the test solution was regulated to 85°C.

Next, oxygen gas or nitrogen gas was continuously supplied into the beaker so that a dissolved oxygen concentration in the beaker became a value shown in Table 1, and the supply amount of the gas was controlled with monitoring a dissolved oxygen meter provided on a circulation line so that the dissolved oxygen concentration became constant.

When the dissolved oxygen concentration became constant, the maximum stress was set to 220 MPa aiming a test time of 96 hours to perform a test with the corrosion fatigue tester.

The test conditions are as follows.

### <Conditions of Corrosion Fatigue Test>

Specimen: Circular-arc fatigue specimen made of STB340 (with considering ASTM E466-96)
Pretreatment of specimen: Parallel part and R part were #800-finished.
Control: Load controlling
Waveform: Sine wave
Maximum stress: 220 MPa
Frequency: 4.0 Hz
Test term: 96 hours at maximum
Temperature of test solution: 85°C
Composition of test solution: Chloride ion = 100 mg/L
   Sulfate ion = 100 mg/L
   Silica = 100 mg/L
pH of test solution: 11.0
Amount of test solution: 1 L

### <Results>

### Table 1 shows the results.

**[Table 1]**

| Test No. | Dissolved oxygen concentration (mg/L) | Number of tensing (ten thousands) | Presence/Absence of specimen rupture | Note |
|---|---|---|---|---|
| 1 | 8.0 | 68 | Presence | Comparative Example |
| 2 | 1.0 | 103 | Presence | Inventive Example |
| 3 | 0.5 | 121 | Presence | |
| 4 | 0.1 | 140 | Absence | |

### <Consideration>

Table 1 demonstrates the followings.

It has been confirmed that a lower dissolved oxygen concentration increases the number of tensing leading to the specimen rupture, and with a dissolved oxygen concentration of 1.0 mg/L or less, the specimen is unlikely to rapture. In particular, it has been confirmed that no rapture occurs with a dissolved oxygen concentration of 0.1 mg/L or less. This was presumably because the lower dissolved oxygen concentration was unlikely to generate corrosion on the specimen surface, or inhibited corrosion growth in fine cracking.

From the results of the number of tensing, it has been confirmed that the dissolved oxygen concentration of 1.0 mg/L is 1.5 times more effective than the dissolved oxygen of 8.0 mg/L, and the dissolved oxygen concentration of 0.1 mg/L is 2.0 times or more more effective than the dissolved oxygen of 8.0 mg/L on the inhibition of the corrosion fatigue.

### [Test Example I]

### <Examples I-1 to 6 and Comparative Examples I-1 to 4>

In a water system in a boiler illustrated in Fig. 1, investigated was a relationship between: a dissolved oxygen concentration of feed-water for the boiler and the presence/absence of addition of a scale dispersant; and a state of the corrosion fatigue of the evaporation tube.

In this water system in the boiler, soft water in which raw water is treated with a softener 1 runs through a water feeding tank 2 to be degassed with a degasser 3. When the degasser 3 was absent, a dissolved oxygen concentration was 8.0 mg/L at an average water temperature of 25°C. The dissolved oxygen concentration was measured immediately after an outlet of the degasser 3. The scale dispersant and a hydroxide-type pH regulator were injected to a water feeding line, which was before a boiler 4.

With this water system in the boiler when the dissolved oxygen concentration was not controlled, cracking on the evaporation tube due to the corrosion fatigue occurred to happen a leakage accident within five years from an operation starting.

Specifications of the target boiler are as follows.
Target boiler: Small-type once-through boiler
Evaporation amount: 1.0 to 2.0 t/h
Operation pressure: 1.0 MPa or lower
Type of fed water: Soft water (electroconductivity: 1 to 50 mS/m)
Quality of water in boiler: pH = 11.0 to 11.8
   Chloride ion = 100 to 400 mg/L
   Sulfate ion = 100 to 400 mg/L
   Silica = 100 to 700 mg/L
   Electroconductivity = 100 to 400 mS/m

Scale dispersant: The following sodium polyacrylate (PANa), sodium polymethacrylate (PMNa), or sodium tripolyphosphate (TPPNa) was used. The addition amount of the polymer was 30 mg/L as a pure component, and the addition amount of the sodium tripolyphosphate was 30 mg/L as phosphate ion, in the water in the boiler.
PANa (4,000): Sodium polyacrylate having a weight-average molecular weight of 4,000
PANa (10,000): Sodium polyacrylate having a weight-average molecular weight of 10,000
PANa (60,000): Sodium polyacrylate having a weight-average molecular weight of 60,000
PMNa (10,000): Sodium polymethacrylate having a weight-average molecular weight of 10,000
TPPNa: Sodium tripolyphosphate
Number of boiler cans of investigation target: 1,519

In Examples I-1 to 6, the feed-water for the boiler was subjected to the degassing treatment with the degasser 3 so that the dissolved oxygen concentration was that shown in Table 2. In Comparative Examples I-1 to 4, the test was performed with the feed-water for the boiler not passed through the degasser 3 and having a dissolved oxygen concentration of 8.0 mg/L.

In Examples I-1 and 2 and Comparative Example I-1, no scale dispersant was added. In Examples I-3 to 6 and Comparative Examples I-2 to 4, the scale dispersant shown in Table 2 was added.

### <Results>

The operation term was five years. Investigated were the number of cracking occurrence on the evaporation tube and occurrence rate of the cracking in the operation term of five years. Table 2 shows the results.

**[Table 2]**

| | Dissolved oxygen concentration (mg/L) | Presence/Absence of addition of scale dispersant | Number of cans with cracking | Number of cans without cracking | Occurrence rate of cracking (%) |
|---|---|---|---|---|---|
| Comparative Example I-1 | 8.0 | Absence | 67 | 226 | 22.9 |
| Comparative Example I-2 | 8.0 | PANa (4,000) added | 21 | 111 | 15.9 |
| Comparative Example I-3 | 8.0 | PANa (10,000) added | 17 | 124 | 12.1 |
| Comparative Example I-4 | 8.0 | PANa (60,000) added | 14 | 119 | 10.5 |
| Example I-1 | 1.0 | Absence | 13 | 132 | 8.9 |
| Example I-2 | 0.1 | Absence | 9 | 155 | 5.5 |
| Example I-3 | 1.0 | TPPNa added | 4 | 125 | 3.1 |
| Example I-4 | 1.0 | PANa (4,000) added | 3 | 106 | 2.8 |
| Example I-5 | 1.0 | PANa (10,000) added | 1 | 120 | 0.8 |
| Example I-6 | 1.0 | PMNa (10,000) added | 1 | 151 | 0.7 |

### <Consideration>

Table 2 demonstrates the followings.

With a high dissolved oxygen concentration of the fed water and without the scale dispersant (Comparative Example I-1), the corrosion fatigue (cracking) was most likely to occur.

When no scale dispersant was added, in Example I-1 in which the dissolved oxygen concentration was as low as 1.0 mL/g, it was presumed that the corrosion was inhibited, the tensile stress was unlikely to increase, and the occurrence of the corrosion fatigue was inhibited compared with Comparative Example I-1 in which the dissolved oxygen concentration was as high as 8.0 mg/L. In Example I-2 in which the dissolved oxygen concentration was 0.1 mg/L and no scale dispersant was added, it was presumed that the corrosion was further inhibited, and the occurrence of the corrosion fatigue was inhibited.

In Examples I-3 to 6 in which the dissolved oxygen concentration was 1.0 mg/L or less and the scale dispersant was used, almost no scale adhered, and few cracking occurs. This was presumably because the tensile stress due to the scale adhesion was further reduced, and the low dissolved oxygen concentration yielded an environment where fatigue and its growth due to the corrosion were more unlikely to occur.

From the above, it has been confirmed that, for inhibiting the corrosion fatigue of the evaporation tube, not only inhibiting the corrosion of the evaporation tube but also inhibiting the scale adhesion further exhibit the effect.

From Examples I-3 to I-6, which use different types of the scale dispersant and the same condition except therefor, polyacrylic acid having a weight-average molecular weight of more than 20,000 and 170,000 or less and/or a salt thereof or polymethacrylic acid having a weight-average molecular weight of more than 1,000 and 100,000 or less and/or a salt thereof as the scale dispersant exhibits excellent effect of inhibiting the corrosion fatigue.

### [Test Example II]

### <Examples II-1 to 4 and Comparative Examples II-1 and 2>

In the water system in the boiler shown in Fig. 1 (note that, in a part thereof, an ion exchanger was appropriately used instead of the softener, and soft water or ion-exchanged water was fed into the water feeding tank), investigated was a relationship between: dissolved oxygen in feed-water for the boiler, the presence/absence of addition of a scale dispersant, and the presence/absence of the ion exchange treatment; and a state of the corrosion fatigue of the evaporation tube.

Although the flow of this water system in the boiler is same as in Test Example I, with an operation condition was as follows when the dissolved oxygen concentration was not controlled, cracking on the evaporation tube due to the corrosion fatigue occurred to happen a leakage accident within three years from an operation starting.

Specifications of the target boiler is as follows.
Target boiler: Small-type once-through boiler
Evaporation amount: 1.0 to 2.0 t/h
Operation pressure: 1.0 MPa or lower
Type of fed water: Soft water or ion-exchanged water
Quality of water in boiler:
   <Case of Soft Water>
      pH = 11.0 to 11.8
      Chloride ion = 150 to 400 mg/L
      Sulfate ion = 150 to 400 mg/L
      Silica = 150 to 700 mg/L Electroconductivity = 150 to 400 mS/m
   <Case of Ion-Exchanged Water>
      pH = 11.0 to 11.8
      Chloride ion = 1 to 10 mg/L
      Sulfate ion = 1 to 10 mg/L
      Silica = 1 to 50 mg/L
      Electroconductivity = 20 to 400 mS/m
Scale dispersant: Sodium polyacrylate having a weight-average molecular weight of 60,000 (PANa (60,000)) was used. The addition amount was 20 mg/L as a pure component of sodium polyacrylate in the water in the boiler.
Number of boiler cans of investigation target: 258

In Examples II-1 to 4, the feed-water for the boiler was subjected to the degassing treatment with the degasser 3 so that the dissolved oxygen concentration was that shown in Table 3. In Comparative Examples II-1 and 2, the test was performed with the feed-water for the boiler not passed through the degasser 3 and having a dissolved oxygen concentration of 8.0 mg/L.

In Comparative Examples II-1 and 2, and Example II-1, soft water softening-treated with the softener 3 was used. In Examples II-2 to 4, the ion-exchanger was used instead of the softener, and ion-exchanged water having an electroconductivity of approximately 1 mS/m was used.

In Example II-2 and Comparative Example II-1, no scale dispersant was added. In Examples II-1, 3, and 4, and Comparative Example II-2, the scale dispersant shown in Table 3 was added.

### <Results>

The operation term was three years. Investigated were the number of cracking occurrence on the evaporation tube and occurrence rate of the cracking in the operation term of three years. Table 3 shows the results.

**[Table 3]**

| | Type of fed water | Dissolved oxygen concentration (mg/L) | Presence/Absence of addition of scale dispersant | Number of cans with cracking | Number of cans without cracking | Occurrence rate of cracking (%) |
|---|---|---|---|---|---|---|
| Comparative Example II-1 | Soft water | 8.0 | Absence | 15 | 41 | 26.8 |
| Comparative Example II-2 | Soft water | 8.0 | Presence | 9 | 57 | 13.6 |
| Example II-1 | Soft water | 1.0 | Presence | 7 | 71 | 9.0 |
| Example II-2 | Ion-exchanged water | 1.0 | Absence | 0 | 13 | 0 |
| Example II-3 | Ion-exchanged water | 1.0 | Presence | 0 | 29 | 0 |
| Example II-4 | Ion-exchanged water | 0.1 | Presence | 0 | 16 | 0 |

### <Consideration>

Table 3 demonstrates the followings.

With the soft water, the cracking due to the corrosion fatigue was observed. However, with the ion-exchanged water having a dissolved oxygen concentration of 1.0 mg/L or less, no corrosion fatigue was observed regardless of the presence/absence of the scale dispersant.

This was presumably because the ion-exchanged water having low concentrations of corrosive salts (chloride ion and sulfate ion) was unlikely to generate the corrosion to be a trigger, and yielded an environment where growth of the fatigue was more unlikely to occur.

From the above, for inhibiting the corrosion fatigue of the evaporation tube, it has been confirmed that lowering the dissolved oxygen concentration and, in addition to, using the ion-exchanged water improve the effect.

The present invention has been described in detail by using the specific aspect, but it is obvious for ones skilled in the art that various modification can be made without departing from the object and scope of the present invention.

The present application is based on Japanese Patent Application No. 2020-043294, filed on March 12, 2020, and the entirety thereof is hereby incorporated by reference.

### Reference Sings List

1 ION-EXCHANGER OR SOFTENER
2 WATER FEEDING TANK
3 DEGASSER
4 BOILER

## Claims

1. A method for inhibiting corrosion fatigue of an evaporation tube in a boiler, comprising controlling a dissolved oxygen concentration of water in the boiler to 1.0 mg/L or less.

2. The method for inhibiting corrosion fatigue of an evaporation tube in a boiler according to claim 1, comprising using ion-exchanged water for the water in the boiler.

3. The method for inhibiting corrosion fatigue of an evaporation tube in a boiler according to claim 1 or 2, comprising adding a scale dispersant to the water in the boiler.

4. The method for inhibiting corrosion fatigue of an evaporation tube in a boiler according to claim 3, wherein the scale dispersant is at least one poly(meth)acrylic acid compound selected from the group consisting of polyacrylic acid having a weight-average molecular weight of 20,000 to 170,000 and a salt thereof, and polymethacrylic acid having a weight-average molecular weight of 1,000 to 100,000 and a salt thereof.

5. The method for inhibiting corrosion fatigue of an evaporation tube in a boiler according to claim 3 or 4, wherein a concentration of the scale dispersant in the water in the boiler is 1 to 1,000 mg/L.

6. The method for inhibiting corrosion fatigue of an evaporation tube in a boiler according to any one of claims 1 to 5, wherein the boiler is a small-type once-through boiler.
